# EUROPÄISCHE PATENTSCHRIFT

(11) **EP 1 604 923 B1**
(45) Veröffentlichungstag und Bekanntmachung des Hinweises auf die Patenterteilung: **14.11.2007**
(21) Anmeldenummer: 05011881.9
(22) Anmeldetag: 02.06.2005
(51) Int. Cl.: B65G 57/32, B65H 31/28

(54) **Einrichtung und Verfahren zum Stapeln und Transportieren von Platten**
Device and method for stacking and transferring plates
Procédé et dispositif pour l'empilement et le transfert de plaques

(30) Priorität: 09.06.2004 DE 102004028205
(43) Veröffentlichungstag der Anmeldung: 14.12.2005
(73) Patentinhaber: VB Autobatterie GmbH & Co. KGaA, 30419 Hannover (DE)
(72) Erfinder: von Werder, Hans-Kurt, Dr.-Ing., 30855 Langenhagen (DE)
(74) Vertreter: Gerstein, Hans Joachim

(56) Entgegenhaltungen:
- US-A- 3 019 886
- US-A- 4 824 307
- US-A- 5 431 530
- US-A- 5 454 687

## Beschreibung

Die Erfindung betrifft eine Einrichtung zum Stapeln und Transportieren von Platten mit einem endlos umlaufenden antreibbaren Fächer-Förderband, das eine Vielzahl von senkrecht auf der Förderauflage angeordneten Stützen zur Bildung von Aufnahmefächern für Plattenstapel hat.

Außerdem betrifft die Erfindung ein Verfahren zum Stapeln und Fördern von Platten.

Bei Herstellungsprozessen für verschiedene Produkte ist es oftmals notwendig, aus einzelnen Platten Stapel dieser Platten zu bilden, in denen die Platten mit ihren ebenen Seiten aneinander liegen und die schmalen Seiten der Platten eine ebene Fläche bilden, so dass geordnete Quader entstehen. So besteht zum Beispiel in der Batterieindustrie während des Herstellungsprozesses von Akkumulatoren die Notwendigkeit, abwechselnd positive und negative Elektrodenplatten aus geeignetem Material aufeinander zu stapeln und Blöcke mit ebenen Seiten zu erhalten, die in einem weiteren Produktionsschritt in Batteriegehäuse eingesetzt werden. Für eine zuverlässige Weiterverarbeitung hat es sich als nützlich erwiesen, wenn die Blöcke aus den positiven und negativen Elektrodenplatten mit senkrecht gestellten schmalen Plattenseiten für die Weiterverarbeitung zur Verfügung gestellt werden.

In der US 4,824,307 ist eine Einrichtung offenbart, bei der einzelne Platten oder kleinere Plattenstapel auf einem Förderband kontinuierlich an eine Stelle befördert werden, an der die Platten oder kleinere Plattenstapel auf ein zweites Förderband übergeben und dort weiter gestapelt werden. Das zweite Förderband, auch Igelband genannt, hat senkrecht zur Förderauflage angeordnete Stützen, die paarweise in einem vorbestimmten Abstand voneinander stehen. Die Übergabe der Platten oder kleineren Plattenstapel erfolgt in der Weise, dass das zweite Förderband in einem deutlichen vertikalen Abstand und etwas seitlich unterhalb des ersten Förderbandes angeordnet ist und die Platten oder kleineren Plattenstapel durch das Eigengewicht in die durch die senkrecht auf dem zweiten Förderband gebildeten Fächer hinunterfallen. Das zweite Förderband wird dabei in einem Takt so angetrieben, dass die einzelnen Fächer komplett mit Platten gefüllt werden. Die ebene Anordnung der schmalen Plattenseiten wird ebenfalls durch das Eigengewicht der Platten erreicht, indem die Platten mit einer geeignet hohen Geschwindigkeit in die Fächer auf dem zweiten Förderband auftreffen und bündig auf der ebenen Förderauflage liegen bleiben. Durch die hohe Aufprallgeschwindigkeit können die Platten leicht zerstört werden, so dass ein hoher Ausschuß entsteht. Der Ausschuß und damit die Produktionskosten für die Batterien steigen mit zunehmender Prozeßgeschwindigkeit.

Von dieser Problemstellung ausgehend soll die eingangs beschriebene Einrichtung dahingehend verbessert werden, dass auch bei hoher Prozeßgeschwindigkeit die Ausschußrate vermindert und die Herstellungskosten verringert sowie der Prozeß insgesamt sicherer wird. Außerdem soll das beschriebene Verfahren zum Stapeln und Transportieren von Platten verbessert werden.

Zur Problemlösung zeichnet sich die gattungsgemäße Einrichtung dadurch aus, dass dem Fächer-Förderband eine Stapelmaschine mit einem Aufnahmeträger zum Aufnehmen von Platten vorgelagert ist und eine Übergabevorrichtung zwischen Stapelmaschine und Fächer-Förderband vorgesehen ist, die zur Übergabe der Plattenstapel aus der Stapelmaschine annähernd waagerecht auf eine Stütze des Fächer-Förderbandes ausgebildet ist, wobei der Aufnahmeträger zwei Aufnahmen aufweist, die je auf einer Seite der Übergabevorrichtung angeordnet sind, und mittels einer ersten Hebe- und Senkvorrichtung sowie eines zweiten Hubaktuators vertikal und horizontal bewegt werden können. Solche Stapelmaschinen zum Stapeln von Platten sind bekannt, beispielsweise aus der US 5,431,530 und der US-A-5454687. Eine weitere Stapelmaschine ist aus der DE 692 11 674 T3 bekannt.

Das Vorschalten der Stapelmaschine vor das Fächer-Förderband hat zur Folge, dass bei gleichbleibender Prozessgeschwindigkeit das Fächer-Förderband und die Übergabevorrichtung mit einer geringeren Geschwindigkeit betrieben werden kann als das Förderband, auf dem die einzelnen Platten oder kleineren Plattenstapel befördert werden. Die Verringerung der Geschwindigkeit entspricht der Dauer, die zum Bilden eines vollständigen Plattenstapels in der Stapelmaschine benötigt wird. Die reduzierte Geschwindigkeit sowohl der Übergabevorrichtung als auch des Fächer-Förderbandes ermöglicht eine langsame und im Wesentlichen waagerechte Übergabe der vollständigen Plattenstapel von der Übergabevorrichtung an das Fächer-Förderband, wodurch der gesamte Prozeß sicherer und Ausschuß reduziert wird.

Zweckmäßig hat die Stapelmaschine einen vertikal beweglichen Aufnahmeträger zum Aufnehmen von Platten, angrenzend zum Aufnahmeträger, einen Anschlag, gegen den die von einem Förderband an die Stapelmaschine übergebene Platte geschoben wird, eine mit dem Aufnahmeträgerträger gekoppelte Hebe- und Senkvorrichtung zum Heben und Senken des Aufnahmeträgers, einen Fanggreifer im Bereiche des Aufnahmeträgers, angrenzend an das Förderband, zum Aufnehmen der Platten, die von dem Förderband an die Stapelmaschine übergeben werden, während sich auf dem Aufnahmeträger ein vollständiger Plattenstapel befindet, eine mit dem Fanggreifer gekoppelte Hebe- und Senkvorrichtung zum Heben und Senken des Fanggreifers sowie einen mit dem Fanggreifer gekoppelten Hubaktuator zum seitlichen Bewegen, d. h. zum horizontalen Hin- und Herbewegen, beispielsweise in Laufrichtung des der Stapelmaschine vorgelagerten Förderbandes, des Fanggreifers.

In einer Ausführungsform ist der Fanggreifer gabelförmig ausgebildet.

Zweckmäßig ist die Übergabevorrichtung ein Riemenförderband, bei dem die Förderauflage durch zwei parallel in einem Abstand angeordneter Riemen gebildet wird, wobei die Riemen eine Breite und einen Abstand aufweisen.

Der Aufnahmeträger weist gemäß der Erfindung zwei Aufnahmen auf, die je auf einer Seite der Übergabevorrichtung angeordnet sind, und mittels einer ersten Hebe- und Senkvorrichtung sowie eines zweiten Hubaktuators vertikal und horizontal bewegt werden können. Der Aufnahmeträger benötigt so in dem Zwischenbereich zwischen den Aufnahmen keine weiteren Elemente, so dass dieser Zwischenbereich vollständig zum Vorbeiführen des Fanggreifers genutzt werden kann. Der Zwischenraum kann für unterschiedliche Ausgestaltungen des Fanggreifers genutzt werden.

Vorteilhaft wird die Hebe- und Senkvorrichtung zum Heben und Senken des Aufnahmeträgerträger durch einen Servo-, Spindel- oder Schrittmotor realisiert.

Die Erfindung wird in den beigefügten Zeichnungen anhand von Ausführungsformen beispielhaft näher erläutert. Es zeigen:
- Fig. 1 -: Skizze einer ersten Stapel- und Fördereinrichtung mit einem Fächer-Förderband, einer Stapelmaschine, einer Übergabevorrichtung und einem Förderband;
- Fig. 2 -: Skizze einer Draufsicht auf die Stapel- und Fördereinrichtung aus Figur 1;
- Fig. 3 -: Skizze einer zweiten Stapel- und Fördereinrichtung gemäß der Erfindung;
- Fig. 4 -: Skizze einer Draufsicht auf die Stapel- und Fördereinrichtung aus Figur 3.

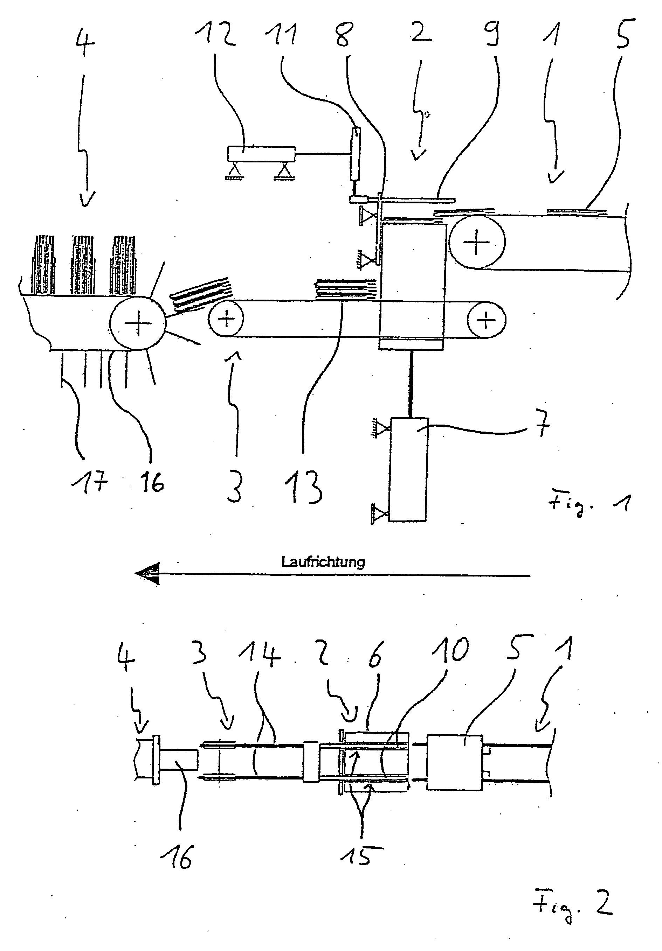

Die Figur 1 zeigt eine Skizze einer Stapel- und Fördereinrichtung mit einem Förderband 1, einer Stapelmaschine 2, einer Übergabevorrichtung 3 und einem Fächer-Förderband 4. Die Laufrichtung der Stapel- und Fördereinrichtung ist von rechts nach links gerichtet.

Auf dem endlos umlaufenden Förderband 1 werden Platten 5 oder Plattenstapel stetig hintereinander zur Stapelmaschine 2 befördert. Die Platten 5 sind waagerecht und zweckmäßig in einem gleichbleibenden Abstand voneinander auf dem Förderband 1 angeordnet.

Die Stapelmaschine 2 umfaßt einen Aufnahmeträger 6, auf dem die Platten 5 waagerecht und übereinander in Stapelform abgelegt werden, eine mit dem Aufnahmeträger 6 gekoppelte erste Hebe- und Senkvorrichtung 7 unterhalb des Aufnahmeträgers 6 zum Heben und Senken des Aufnahmeträgers 6, einen Anschlag 8, angrenzend an den Aufnahmeträger 6 gegenüberliegend zum Förderband 1, um die Übergabe der Platte 5 zu stoppen. Weiterhin ist ein Fanggreifer 9 mit gabelförmigen Trägern 10 auf einer Ebene parallel zur Aufnahmeebene des Aufnahmeträgers 6 vorgesehen. In Ruheposition befinden sich die gabelförmigen Träger 10 oberhalb von der Aufnahmeebene des Aufnahmeträgers 6. Eine zweite Hebe- und Senkvorrichtung 11 ist mit dem Fanggreifer 9 zum Heben und Senken des Fanggreifers 9 gekoppelt. Zudem ist ein erster Hubaktuator 12 zum horizontalen Hin- und Herbewegen des Fanggreifers 9 in Laufrichtung des dem Fanggreifers 9 unmittelbar vorgelagerten Förderbandes 1 mit diesem gekoppelt.

Die Stapelmaschine 2 ist am Ende des Förderbandes 1 in der Weise angeordnet, dass die Übergabe der Platte 5 von dem Förderband 1 an die Stapelmaschine 2 nahezu waagerecht auf den Aufnahmeträger 6 beziehungsweise die bereits auf ihm liegenden Platten 5 erfolgt. Der Anschlag 8 ist so positioniert, dass die Platte 5 bei der Übergabe gegen den Anschlag 8 befördert wird und in waagerechter Lage auf dem Aufnahmeträger 6 beziehungsweise der Platten 5 liegen bleibt. Die Platten 5 bilden in der Stapelmaschine 2 einen Plattenstapel 13 mit ebenen Seitenflächen. Nach der Übergabe einer Platte 5 von dem Förderband 1 an die Stapelmaschine 2 senkt die erste Hebe- und Senkvorrichtung 7 den Aufnahmeträger 6 und die sich darauf befindlichen Platten 5 um etwa eine Plattendicke. Dazu wird die erste Hebe- und Senkvorrichtung 7 mit einem Antrieb, der ein Servo-, Spindel- oder Schrittmotor oder ein computer- oder mikrocomputergesteuerter Elektromotor sein kann, angetrieben. Eine Zählvorrichtung ermittelt die Anzahl der Platten 5 in der Stapelmaschine 2 beziehungsweise die bereits in die Stapelmaschine 2 beförderten Platten 5 und damit die Dicke des Plattenstapels 13. Der Fanggreifer 9 ist so angeordnet, dass er durch die zweite Hebe- und Senkvorrichtung 11 und den ersten Hubaktuator 12 bei Erreichen der Sollplattendicke in der Stapelmaschine 2 in eine Position bewegt werden kann, um die nächste Platte 5 von dem Förderband 1 in der Weise wie der Aufnahmeträger 6 zuvor zu übernehmen.

Unterhalb des Aufnahmeträgers 6 ist die Übergabevorrichtung 3 angeordnet. Die Übergabevorrichtung 3 ist ein Riemenförderband mit zwei parallelen Riemen 14. Alternativ können auch Ketten eingesetzt werden. Der Aufnahmeträger 6 wird durch die erste Hebe- und Senkvorrichtung 7 unter die Riemen 14 der Übergabevorrichtung 3 gesenkt.

In der Figur 2 ist gezeigt, dass der Aufnahmeträger 6 zu diesem Zweck zwei gabelförmige Aussparungen 15 im Abstand und Ausmaß der Riemen 14 aufweist, in denen die Riemen 14 lose bewegt werden können. Sobald der Aufnahmeträger 6 unter die Riemen 14 gelangt, wird der Plattenstapel 13 von den Riemen 14 erfaßt und mitgeführt. Der Aufnahmeträger 6 wird danach von der ersten Hebe- und Senkvorrichtung 7 wieder nach oben gehoben, bis er die Platten 5, die sich auf dem Fanggreifer 9 befinden, übernehmen kann. Dazu werden die zwei parallelen Träger 10 des Fanggreifers 9 durch die Aussparungen 15 in dem Aufnahmeträger 6 hindurch geführt. Sobald die Platten 5 von dem Aufnahmeträger 6 übernommen worden sind, wird der Fanggreifer 9 durch den ersten Hubaktuator 12 horizontal aus der vertikalen Flucht der Platten 5 in der Stapelmaschine 2 heraus und anschließend von der zweiten Hebe- und Senkvorrichtung 11 und dem ersten Hubaktuator 12 in seine Ausgangsposition bewegt.

Am Ende der Übergabevorrichtung 3 befindet sich der Anfang des Fächer-Förderbands 4 mit einer Förderauflage 16 und senkrecht davon abstehenden Stützen 17. Das Fächer-Förderband 4 ist so angeordnet, dass die Plattenstapel 13 nahezu waagerecht auf die Stützen 17 geschoben und von den Stützen 17 mitgenommen und aufgestellt werden. Die Stützen 17 sind so angeordnet, dass zwei jeweils benachbarte Stützen 17, zwischen denen sich ein Plattenstapel 1 3 befindet, in paralleler Stellung genau eine Plattendicke weit auseinander sind. Dadurch behalten die Plattenstapel 13 ihre Stapelform und ebene Wandung bei, während sie von dem Fächer-Förderband 4 in vertikaler Stellung befördert werden.

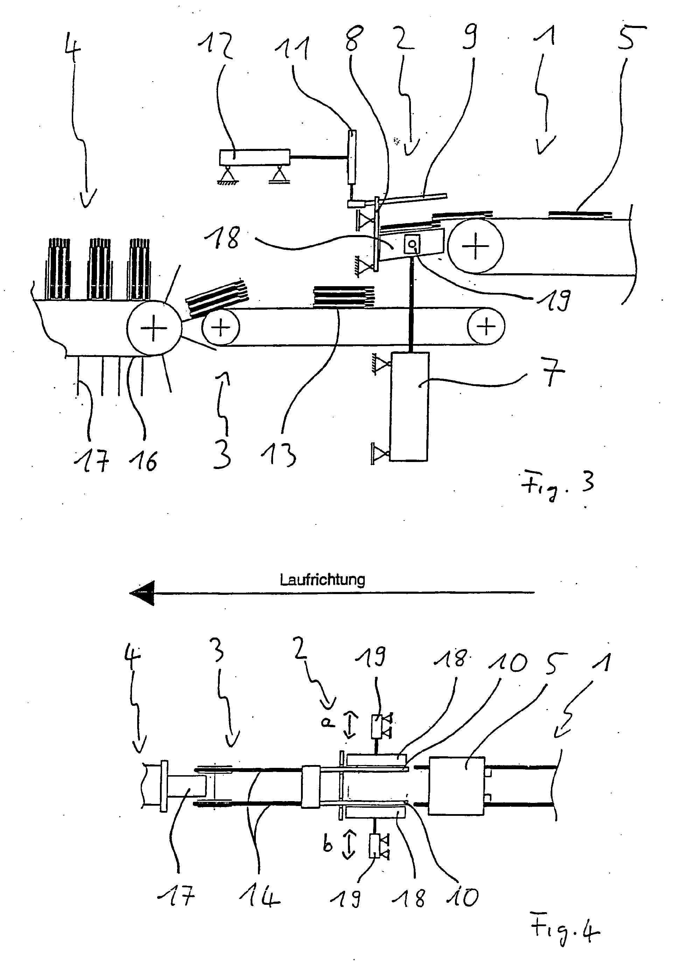

Die zweite Ausführungsform in den Figuren 3 und 4 unterscheidet sich von der vorstehend beschriebenen Ausführungsform dadurch, dass der Aufnahmeträger 6 aus zwei im Wesentlichen parallel zueinander und zur Förderrichtung der Platten 5 angeordneten rechteckigen Aufnahmen 18 besteht, die mittels der ersten Hebe- und Senkvorrichtung 7 vertikal bewegt werden können. Zusätzlich sind zweite Hubaktuatoren 19 vorgesehen, mit denen die Aufnahmen horizontal in Richtung der Doppelpfeile a und b bewegt werden können. Durch die Kombination der ersten Hebe- und Senkvorrichtung 7 mit den zweiten Hubaktuatoren 19 ist es möglich, die Aufnahmen 18 nach der Übergabe eines Plattenstapels 13 an die Übergabevorrichtung 3 seitlich in Richtung der Doppelpfeile a und b von der Übergabevorrichtung 3 weg zu bewegen und damit seitlich an der Stapelmaschine 2 entlang in ihre Ausgangslage zurückzuführen.

## Patentansprüche

1. Einrichtung zum Stapeln und Fördern von Platten (5) mit einem endlos umlaufenden antreibbaren Fächer-Förderband (4), das eine Vielzahl von senkrecht auf der Förderauflage (16) angeordnete Stützen (17) zur Bildung von Aufnahmefächern für Plattenstapel (13) hat, wobei dem Fächer-Förderband (4) eine Stapelmaschine (2) mit einem Aufnahmeträger (6) vorgelagert ist, die zur Bildung der vollständigen in den Aufnahmefächern des Fächer-Förderbandes (4) aufgenommenen Plattenstapel (13) dient und eine Übergabevorrichtung (3) zwischen Stapelmaschine (2) und Fächer-Förderband (4) vorgesehen ist, die zur Übergabe der Plattenstapel (13) aus der Stapelmaschine (2) annähernd waagerecht auf eine der Stützen (17) des Fächer-Förderbandes (4) ausgebildet ist, **dadurch gekennzeichnet, dass** der Aufnahmeträger (6) zwei Aufnahmen (18) aufweist, die je auf einer Seite der Übergabevorrichtung (3) angeordnet sind, und mittels einer ersten Hebe- und Senkvorrichtung (7) sowie eines zweiten Hubaktuators (19) vertikal und horizontal bewegt werden können.

2. Einrichtung nach Anspruch 1, **dadurch gekennzeichnet, dass** die Stapelmaschine hat:
- einen Anschlag (8), angrenzend zum Aufnahmeträger (6) gegen den die von einem Förderband (1) an die Stapelmaschine (2) übergebene Platte (5) befördert wird,
- einen Fanggreifer (9) im Bereich des Aufnahmeträgers (6) angrenzend an das Förderband (1) zum Aufnehmen der Platten (5), die von dem Förderband (1) an die Stapelmaschine (2) übergeben werden, während sich auf dem Aufnahmeträger (6) ein vollständiger Plattenstapel (13) befindet,
- eine mit dem Fanggreifer (9) gekoppelte zweite Hebe- und Senkvorrichtung (11) zum Heben und Senken des Fanggreifers (9),
- einen mit dem Fanggreifer (9) gekoppelten ersten Hubaktuator (12) zum horizontalen Bewegen des Fanggreifers (9).

3. Einrichtung nach Anspruch 2, **dadurch gekennzeichnet, dass** der Fanggreifer (9) gabelförmig ausgebildet ist.

4. Einrichtung nach einem der Ansprüche 2 bis 3, **dadurch gekennzeichnet, dass** die Übergabevorrichtung (3) ein Förderband ist, bei dem die Förderauflage durch zwei parallel in einem Abstand angeordnete Riemen (14) gebildet wird, wobei die Riemen (14) eine Breite und einen Abstand aufweisen.

5. Einrichtung nach einem der Ansprüche 2 bis 4, **dadurch gekennzeichnet, dass** die erste Hebe- und Senkvorrichtung (7) zum Heben und Senken des Aufnahmeträgers (6) durch einen Servomotor realisiert wird.

6. Einrichtung nach einem der Ansprüche 2 bis 4, **dadurch gekennzeichnet, dass** die erste Hebe- und Senkvorrichtung (7) zum Heben und Senken des Aufnahmeträgers (6) durch einen Spindelmotor realisiert wird.

## Claims

1. A device for stacking and conveying plates (5), having a continuously revolving, drivable bay-type conveyor (4), which has a multiplicity of supports (17), arranged vertically on the conveyor bearing surface (16), for forming receiving bays for plate stacks (13), wherein upstream of the bay-type conveyor (4) there is located a stacking machine (2) comprising a receiving carrier (6) provided for forming the complete plate stacks (13) received in the receiving bays of the bay-type conveyor (4), and between the stacking machine (2) and the bay-type conveyor (4) there is provided a transfer apparatus (3), which is designed to transfer the plate stacks (13) from the stacking machine (2), approximately horizontally, onto one of the supports (17) of the bay-type conveyor (4), **characterized in, that** the receiving carrier (6) has two receptacles (18), which are disposed on one side each of a first raising and lowering apparatus (7) and of a second lift actuator (19), can be moved vertically and horizontally.

2. The device as claimed in claim 1, **characterized in that** the stacking machine has:
- a stop (8), adjacent to the receiving carrier (6), against which the plate (5) transferred from a conveyor (1) to the stacking machine (2) is transported,
- a grab (9) in the region of the receiving carrier (6), adjacent to the conveyor (1), for receiving the plates (5) transferred from the conveyor (1) to the stacking machine (2) while there is a complete plate stack (13) present on the receiving carrier (6),
- a second raising and lowering apparatus (11), coupled to the grab (9), for raising and lowering the grab (9),
- a first lift actuator (12), coupled to the grab (9), for the horizontal movement of the grab (9).

3. The device as claimed in claim 2, **characterized in, that** the grab (9) is of forked configuration.

4. The device as claimed in one of claims 2 to 3, wherein the transfer apparatus (3) is a conveyor, in which the conveyor bearing surface is formed by two belts (14) disposed in parallel at a distance apart, the belts (14) having a width and a spacing.

5. The device as claimed in one of claims 2 to 4, wherein the first raising and lowering apparatus (7) for raising and lowering the receiving carrier (6) is realized by a servo motor.

6. The device as claimed in one of claims 2 to 4, wherein the first raising and lowering apparatus (7) for raising and lowering the receiving carrier (6) is realized by a spindle motor.

## Revendications

1. Installation pour empiler et transporter des plaques (5) à l'aide d'un convoyeur à bande à compartiments (4), sans fin, entraînée, ayant un grand nombre de supports (17) installés perpendiculairement sur l'appui de transport (16) pour former des compartiments recevant des piles de plaques (13),
le convoyeur à bande à compartiments (4) étant précédé d'une empileuse (2) avec un porte-récepteurs (6) pour former la pile des plaques (13) reçues complètement dans les compartiments du convoyeur à bande à compartiments (4), et un dispositif de transfert (3) étant prévu entre l'empileuse (2) et le convoyeur à bande et compartiments (4) pour transférer la pile de plaques (13) de l'empileuse (2), en position sensiblement horizontale sur l'un des supports (17) du convoyeur à bande et compartiments (4),
**caractérisée en ce que**
le porte-récepteurs (6) a deux récepteurs (18), un de chaque côté du dispositif de transfert (3) et qui peuvent être déplacés verticalement et horizontalement par un premier ascenseur (7) et un second actionneur de translation (19).

2. Installation selon la revendication 1,
**caractérisée en ce que**
l'empileuse comporte :
- une butée adjacente au porte-récepteurs (6) contre laquelle arrive la plaque (5) transférée d'un convoyeur à bande (1) dans l'empileuse (2),
- une pince réceptrice (5) dans la zone du porte-récepteurs (6) au voisinage de la bande transporteuse (1) pour recevoir les plaques (5) transférées de la bande transporteuse (1) à l'empileuse (2) lorsqu'une pile de plaques (13), complète, se trouve sur le porte-récepteurs (6),
- un second ascenseur (11) couplé à la pince réceptrice (9) pour la soulever et l'abaisser,
- un premier actionneur de translation (12) couplé à la pince réceptrice (9) pour la déplacer horizontalement.

3. Installation selon la revendication 2,
**caractérisée en ce que**
la pince réceptrice (9) a une forme de fourche.

4. Installation selon l'une des revendications 2 à 3,
**caractérisée en ce que**
le dispositif de transfert (3) est une bande transporteuse dont le support de transport est constitué par deux courroies (14) parallèles, écartées, les courroies (14) ayant une certaine largeur et un certain écartement.

5. Installation selon l'une des revendications 2 à 4,
**caractérisée en ce que**
le premier ascenseur (7) est réalisé pour soulever et abaisser le porte-récepteurs (6) à l'aide d'un servomoteur.

6. Installation selon l'une des revendications 2 à 4,
**caractérisée en ce que**
le premier ascenseur (7) est réalisé pour soulever et abaisser le porte-récepteurs (6) à l'aide d'un moteur à broche.
